# EUROPEAN PATENT SPECIFICATION

(11) **EP 1 255 648 B1**
(45) Date of publication and mention of the grant of the patent: **05.12.2007**
(21) Application number: 01916722.0
(22) Date of filing: 01.02.2001
(51) Int. Cl.: B41J 2/475, G02B 27/42, B41J 2/45, G02B 27/46, B41J 2/46

(54) **HIGH POWER LASER HEAD SYSTEM**
HOCHLEISTUNGS-LASERKOPFSYSTEM
SYSTEME DE TETE LASER A PUISSANCE ELEVEE

(30) Priority: 03.02.2000 US 180052 P
(43) Date of publication of application: 13.11.2002
(73) Proprietor: Kodak Polychrome Graphics GmbH, 37520 Osterode/Harz (DE)
(72) Inventor: MOULIN, Michel, CH-1143 Apples (CH)
(74) Representative: Vossius & Partner
(86) International application number: PCT/US2001/040002
(87) International publication number: WO 2001/057580

(56) References cited:
- DE-A- 19 918 391
- US-A- 4 281 904
- US-A- 4 900 130
- US-A- 4 911 526
- US-A- 5 517 359
- US-A- 5 923 475
- PATENT ABSTRACTS OF JAPAN vol. 008, no. 216 (M-329), 3 October 1984 (1984-10-03) -& JP 59 101378 A (SUWA SEIKOSHA KK), 11 June 1984 (1984-06-11)

## Description

### BACKGROUND OF THE INVENTION

### 1. Field of the Invention

This invention is directed to an illumination system and method for imaging offset plates or films. More particularly, this invention is directed to an illumination system in which optical fibers convey laser light to a modulator which is employed to image a plate or film precursor.

### 2. Background Information

To image offset plates or films where the image is obtained by sublimation of a thin layer of absorbing matter, a very high density of energy is necessary. In some existing imaging systems using external drums, the imaging laser unit consists of a plurality of individual laser diodes. Each diode is provided with its own power supply and affects a specific imaging area. An optical fiber is associated with each diode to collect the emitted energy. One or several optical means project the image of the output end of the optical fibers to the drum. Each output beam can supply a power up to 0.6 watt on a spot diameter of the order of 25 microns. Arrangements with 32 or 64 beams are complex, expensive and create problems of reliability caused by the large number of components.

As an alternative to the use of individual laser diodes to produce a plurality of light spots, U.S. Patent No. 4,281,904 teaches the use of a total internal reflection (TIR) spatial modulator associated with a punctual source. The arrangement allowing the transmission of zero order rays at the exclusion of higher order rays is the best from a transmitted energy point of view, and is preferable for the modulation of high-energy beams. A punctual radiation source can be obtained by the use of a YAG laser, but this approach is expensive and the emitted power is limited. U.S. Patent No. 5,517,359 discloses the use of lenslets to direct the rays emerging from separate emitters to a modulator.

Imaging systems are disclosed, for example in U.S. Patent No. 6,137,631, U.S. Patent No. 6,222,666 and International Patent Application WO 01/56788 entitled "DEVICE FOR EXPOSING THERMOSENSITIVE MEDIA".

DE 199 183 91 relates to a grating modulator array comprised of a plurality of modulator sites. Each modulator site is comprised of a plurality of first poled regions and a plurality of second poled regions alternating with said first poled regions. A first electrode is attached to a first end of each of the modulator sites and a second electrode is attached to a second end of each of the modulator sites and each of the electrode pairs establishes a field in the poled regions of the modulator sites which causes a phase shift in polarized light incident on the modulator.

It is an object of the present invention to overcome the limitations and drawbacks of the prior art.

The object of the invention is achieved with the features of the claims.

### SUMMARY OF THE INVENTION

An illumination system of this invention comprises:
(a) a plurality of laser radiation sources;
(b) means for collimating rays from the laser radiation sources;
(c) means for imaging the collimated rays;
(d) means for collimating the imaged rays;
(e) means for modulating the imaged and collimated rays, wherein focalizing means focalize the imaged and collimated rays on the modulating means;
(f) lens means which receive rays from the modulating means;
(g) means for separating the diffraction orders of rays received from the lens means; and
(h) imaging means for receiving rays from the separating means and forming a reduced image of the modulator; characterised by
(i) transmission means comprising a plurality of optical fibers for transmitting said rays from the laser radiation sources to said means for collimating rays from the laser radiation sources, the juxtaposition of the optical fiber cores effectively producing the equivalent of a single radiation source of very small size.

According to one embodiment of the present invention a radiation source of very small size whose power is of the order of 100 watts is created by the juxtaposition of optical fiber cores and associated optics with the source to uniformly illuminate a TIR modulator. According to another embodiment of the invention, the output end of one or a group of laser fibers is cemented to an optical mixer in the form of a glass plate. The divergence of the beams entering the modulator is small to allow for the separation of orders whose diffraction angles are also small.

### BRIEF DESCRIPTION OF THE DRAWINGS

FIG. 1 represents schematically the assembly of the laser head according to the present invention.
FIG. 2 represents a preferred arrangement for the integration of several fiber light sources to the head assembly.
FIG. 3 is a partial cross section of a component of Figure 2.

### DETAILED DESCRIPTION OF THE INVENTION

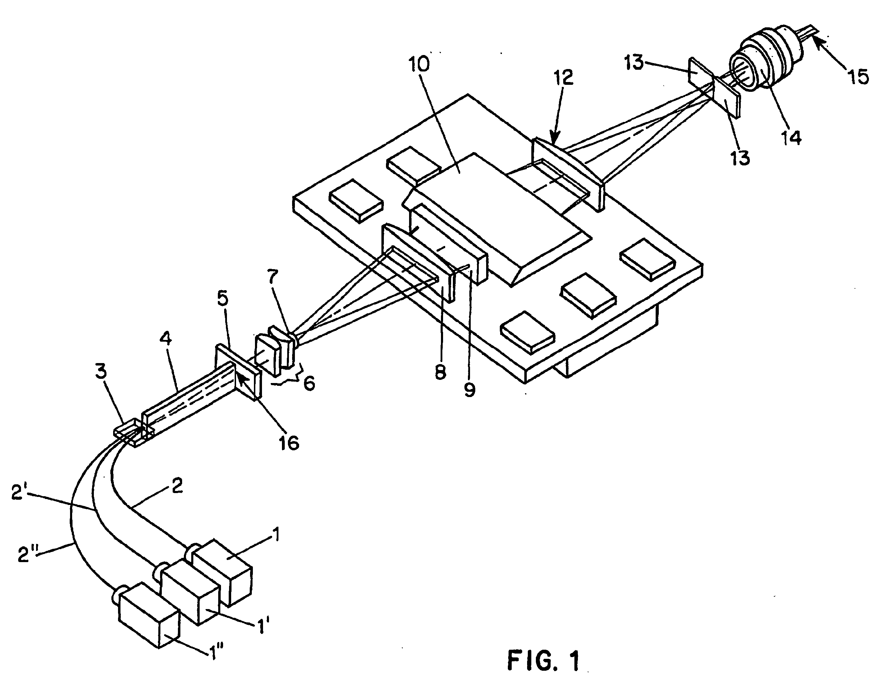

FIG 1 represents a preferred embodiment the illumination system of this invention. The radiation source consists of the assembly of three optical fibers 2, 2', 2" individually associated with laser radiation sources 1,1',1" separate but preferably operated in unison. Each optic fiber 2, 2', 2" preferably has a core diameter of the order of four (4) microns and preferably has a power of the order of thirty (30) watts. The input ends of fibers 2, 2', and 2" are connected to sources 1, 1' and 1", respectively. The output ends of each fiber are cemented to a junction plate 3 in accurately located etched grooves to position each fiber side by side. The cores of the fibers are thus located on a common plane with a degree of accuracy of the order of one micron. A glass plate 4 approximately 2 centimeters long and a few tenths of a millimeter thick and having input surface 4' and output surface 4" is positioned against junction plate 3, adjacent to the output ends of the fiber bundle and at right angles to it. The upper and lower surfaces 3' and 3" respectively of junction plate 3 are parallel with the plane of the TIR modulator 10. A cylindrical lens 5 having an axis parallel with the modulator plane is located in proximity to output surface 4" of glass plate 4 to collimate the beams 50 in the plane perpendicular to the modulator 10.

As disclosed in U.S. Patent No. 6,137,631, the image 16 of the output end 4" of glass plate 4 is made on the central plane of modulator 10 by a plurality of (preferably a group of two) cylindrical lenses 6. At the focal point 7 of this lens group 6, the bundle of beams has a minimum width, referred to herein as a "stop". The distance from this stop to cylindrical collimating lens 8 located at the input to the modulator 10 corresponds to the focal length of lens group 6. The image of the stop is formed on slit 13 of plate 13', for the separation of orders emerging from lens 12. The width of the slit 13 corresponds to the width of the image of the stop. The rays of the image of this stop of the first order are blocked by the plate 13'. Cylindrical lens 9 focalizes the beam on the active zone of the modulator 10. Telecentric objective 14 forms a reduced image 15 of this zone on a radiation sensitive media (not shown) or on the input of another optical system (not shown). The sensitive media could be either a flat printing plate as shown in WO 00/49463 , or wrapped around a drum as shown in U.S. Pat. No. 4,819,018.

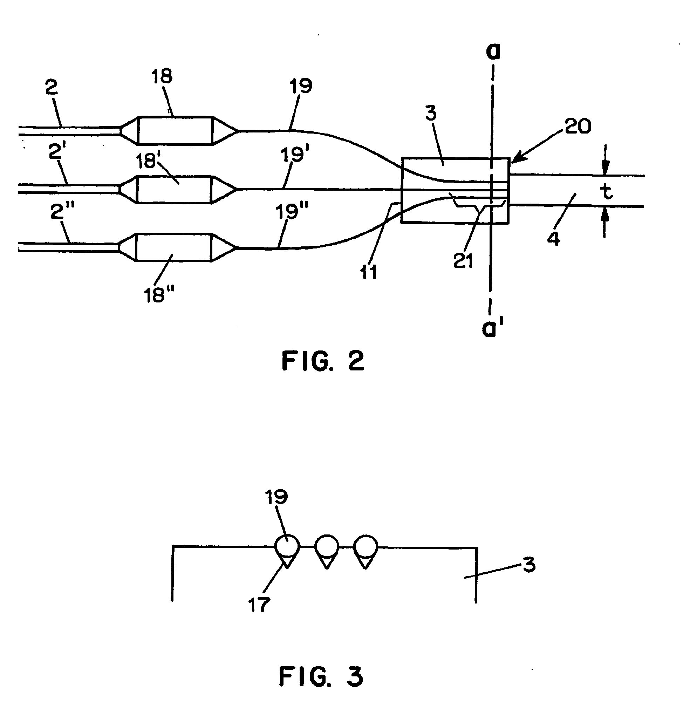

A preferred arrangement of the optic fibers is illustrated in Figure 2. The beams emerging from the end of each laser fiber 2,2',2" are not well defined. For this reason and also for easier construction, the addition of an intermediate array of fibers has been found beneficial. The output end of each optical laser fiber is accurately centered to the input point of an optical coupler 18, 18',18" to transfer the output beams of the small core of each laser fiber to intermediate fibers 19,19',19" of larger diameter, hence more easy to handle. These "coupled" fibers coming from the output of each unit can be about 20 microns in diameter. They are directed, fan-wise, to junction plate 3, which as shown in Figure 2, is provided with etched V-shaped grooves 17 represented as shown in Figure 3, which is a partial cross section along line a-a' of junction plate 3. The purposes of grooves 17 are to direct and secure the fibers. Grooves 17 channel the fibers 19, 19', 19" arriving fan-wise at the first end 11 of plate 3 (FIG. 2) to second end 20. From their fanshaped form, the grooves 17 reside in straight parallel sections 21, accurately located, spaced by approximately 20 microns and exactly perpendicular to second end 20 of junction plate 3. Perfect alignment of the ends of the fibers 19, 19' 19"and their perpendicularity to the face of second end 20 of junction plate 3 are thus insured by the grooves 17 in which they are secured. They are also positioned lengthwise so that their radiation emitting cores end up flush with the face of second end 20 of junction plate 3 to which glass plate 4 is cemented to insure good optical coupling.

The arrangement just described makes it possible to generate an array of 64 beams shown in Fig. 1 as impinging on media 15, with each beam carrying a power of more than 0.5 watt. This is not a limit and more beams could be provided. Although three laser optical fibers have been described, this number can be increased, to effectively produce at the output end of junction plate 3 the equivalent of a single radiation source relative to the downstream optical system employed therewith. The arrangement as per the invention makes it possible to sublimate absorbing layers on a substrate and thus produce images without any chemical process.

It will be understood that the exemplary embodiments described herein in no way limit the scope of the invention. Other modifications of the invention will be apparent to these skilled in the art in view of the foregoing descriptions. Accordingly, the invention is not limited to the described embodiments and all alternative modifications and variations of the present invention which fall within the scope of the appended claims are within the scope of this invention.

## Claims

1. An illumination system comprising:
(a) a plurality of laser radiation sources (1,1',1");
(b) means (5) for collimating rays from the laser radiation sources (1,1',1");
(c) means (6) for imaging the collimated rays;
(d) means (8) for collimating the imaged rays;
(e) means (10) for modulating the imaged and collimated rays, wherein focalizing means (9) focalize the imaged and collimated rays on the modulating means;
(f) lens means (12) which receive rays from the modulating means;
(g) means (13) for separating the diffraction orders of rays received from the lens means; and
(h) imaging means (14) for receiving rays from the separating means and forming a reduced image of the modulator; **characterised by**
(i) transmission means comprising a plurality of optical fibers (2,2',2") for transmitting said rays from the laser radiation sources (1,1',1") to said means (5) for collimating rays from the laser radiation sources (1,1',1"), the juxtaposition of the optical fiber cores effectively producing the equivalent of a single radiation source of very small size.

2. The system of claim 1, further comprising a glass plate (4) disposed to receive rays from the optical fibers and configured to mix the rays and transmit the mixed rays to the collimating means recited in (b).

3. The system of claim 1 or 2, in which the means for collimating rays from the laser sources is a collimating lens.

4. The system of any of claims 1 to 3, in which the means for imaging the collimated rays is a plurality of imaging lenses.

5. The system of any of claims 1 to 4, in which the means for collimating the imaged rays is a collimating lens.

6. The system of any of claims 1 to 5, in which the modulating means is a total internal reflection modulator.

7. The system of any of claims 1 to 6, in which the focalizing means is a focalizing lens.

8. The system of any of claims 1 to 7, in which the lens means receiving rays from the collimating means is a lens.

9. The system of any of claims 1 to 8, in which the means for separating the diffraction orders of rays is a plate having a slit.

10. The system of any of claims 1 to 9, in which the imaging means for receiving rays from the separating means is a telecentric objective lens.

## Patentansprüche

1. Belichtungssystem, das aufweist:
(a) mehrere Laserstrahlungsquellen (1,1',1");
(b) Einrichtung (5) zum Kollimieren von Strahlen aus den Laserstrahlungsquellen (1,1',1");
(c) Einrichtung (6) zum Abbilden der kollimierten Strahlen;
(d) Einrichtung (8) zum Kollimieren der abgebildeten Strahlen;
(e) Einrichtung (10) zum Modulieren der abgebildeten und kollimierten Strahlen, wobei eine Fokussierungseinrichtung (9) die abgebildeten und kollimierten Strahlen auf die Modulationseinrichtung fokussiert;
(f) Linseneinrichtung (12), die Strahlen aus der Modulationseinrichtung empfängt;
(g) Einrichtung (13) zum Separieren der Beugungsordnungen von aus der Linseneinrichtung empfangenen Strahlen; und
(h) Abbildungseinrichtung (14) zum Empfangen von Strahlen aus der Separationseinrichtung und zum Erzeugen eines verkleinerten Abbilds des Modulators;
**gekennzeichnet durch**
(i) eine Übertragungseinrichtung, die mehrere optische Fasern (2,2,2") aufweist, um die Strahlen aus den Laserstrahlungsquellen (1,1',1") zu der Einrichtung (5) zum Kollimieren der Strahlen aus den Laserstrahlungsquellen (1,1',1") hin zu übertragen, wobei das Nebeneinanderanordnen der optischen Faserkerne wirkungsvoll das Äquivalent einer einzigen sehr kleinen Strahlungsquelle erzeugt.

2. System nach Anspruch 1, ferner mit einer Glasplatte (4), die angeordnet ist, um Strahlen aus den optischen Fasern zu empfangen, und konzipiert ist, um die Strahlen zu mischen und die gemischten Strahlen zu der in (b) angegebenen Kollimierungs-Einrichtung zu übertragen.

3. System nach Anspruch 1 oder 2, in welchem die Einrichtung zum Kollimieren der Strahlen aus den Laserquellen eine Kollimierungs-Linse ist.

4. System nach einem der Ansprüche 1 bis 3, in welchem die Einrichtung zum Abbilden der kollimierten Strahlen mehrere Abbildungslinsen sind.

5. System nach einem der Ansprüche 1 bis 4, in welchem die Einrichtung zum Kollimieren der abgebildeten Strahlen eine kolimierten Linse ist.

6. System nach einem der Ansprüche 1 bis 5, in welchem die Modulationseinrichtung ein Modulator mit innerer Totalreflexion ist.

7. System nach einem der Ansprüche 1 bis 6, in welchem die Fokussierungseinrichtung eine Fokussierungslinse ist.

8. System nach einem der Ansprüche 1 bis 7, in welchem die Linseneinrichtung, die Strahlen aus der Kollimierungs-Einrichtung empfängt, eine Linse ist.

9. System nach einem der Ansprüche 1 bis 8, in welchem die Einrichtung zum Separieren der Beugungsordnungen von Strahlen eine Platte mit einem Schlitz ist.

10. System nach einem der Ansprüche 1 bis 9, in welchem die Abbildungseinrichtung zum Empfangen der Strahlen aus der Separationseinrichtung eine telezentrische Objektivlinse ist.

## Revendications

1. Système d'éclairage comprenant :
(a) une pluralité de sources de rayonnement laser (1, 1', 1") ;
(b) un moyen (5) pour collimater les rayons provenant des sources de rayonnement laser (1, 1', 1") ;
(c) un moyen (6) pour imager les rayons collimatés ;
(d) un moyen (8) pour collimater les rayons imagés ;
(e) un moyen (10) pour moduler les rayons imagés et collimatés, dans lequel le moyen de focalisation (9) focalise les rayons imagés et collimatés sur le moyen de modulation ;
(f) des moyens de lentilles (12) qui reçoivent les rayons provenant du moyen de modulation ;
(g) un moyen (13) pour séparer les ordres de diffraction des rayons reçus à partir des moyens de lentilles ; et
(h) un moyen d'imagerie (14) pour recevoir les rayons provenant du moyen de séparation et former une image réduite du modulateur ; **caractérisé par**
(i) le moyen de transmission comprenant une pluralité de fibres optiques (2, 2', 2") pour transmettre lesdits rayons provenant des sources de rayonnement laser (1, 1', 1") audit moyen (5) pour collimater les rayons provenant des sources de rayonnement laser (1, 1', 1 "), la juxtaposition des coeurs de fibres optiques produisant effectivement l'équivalent d'une unique source de rayonnement de très petite taille.

2. Système selon la revendication 1, comprenant en outre une plaque de verre (4) disposée pour recevoir des rayons provenant des fibres optiques et configurée pour mélanger les rayons et transmettre les rayons mélangés au moyen de collimation mentionné dans (b).

3. Système selon la revendication 1 ou 2, dans lequel le moyen pour collimater les rayons provenant des sources laser est une lentille de collimation.

4. Système selon l'une quelconque des revendications 1 à 3, dans lequel le moyen pour imager les rayons collimatés est une pluralité de lentilles d'imagerie.

5. Système selon l'une quelconque des revendications 1 à 4, dans lequel le moyen pour collimater les rayons imagés est une lentille de collimation.

6. Système selon l'une quelconque des revendications 1 à 5, dans lequel le moyen de modulation est un modulateur de réflexion interne totale.

7. Système selon l'une quelconque des revendications 1 à 6, dans lequel le moyen de focalisation est une lentille de focalisation.

8. Système selon l'une quelconque des revendications 1 à 7, dans lequel le moyen de lentille recevant les rayons provenant du moyen de collimation est une lentille.

9. Système selon l'une quelconque des revendications 1 à 8, dans lequel le moyen pour séparer les ordres de diffraction des rayons est une plaque munie d'une fente.

10. Système selon l'une quelconque des revendications 1 à 9, dans lequel le moyen d'imagerie permettant de recevoir les rayons provenant du moyen de séparation est une lentille d'objectif télécentrique.
